# EUROPÄISCHE PATENTSCHRIFT

(11) **EP 2 920 554 B1**
(45) Veröffentlichungstag und Bekanntmachung des Hinweises auf die Patenterteilung: **07.11.2018**
(21) Anmeldenummer: 12799509.0
(22) Anmeldetag: 14.11.2012
(51) Int. Cl.: G01D 5/347, G01D 18/00, G01D 5/244, G01P 21/02

(54) **VERFAHREN ZUM KALIBRIEREN EINES DREHGEBERS**
METHOD FOR CALIBRATING A ROTARY ENCODER
PROCÉDÉ D'ÉTALONNAGE D'UN RÉSOLVEUR

(43) Veröffentlichungstag der Anmeldung: 23.09.2015
(73) Patentinhaber: Baumüller Nürnberg GmbH, 90482 Nürnberg (DE)
(72) Erfinder: SCHINDLER, Achim, 85072 Eichstätt (DE)
(74) Vertreter: FDST Patentanwälte
(86) Internationale Anmeldenummer: PCT/EP2012/004713
(87) Internationale Veröffentlichungsnummer: WO 2014/075698

(56) Entgegenhaltungen:
- EP-A2- 2 058 628
- DE-A1- 10 335 862
- US-A1- 2010 321 006
- US-B1- 6 598 196

## Beschreibung

Die Erfindung betrifft ein Verfahren zum Kalibrieren eines eine Sinus-Spur und eine Cosinus-Spur ausgebenden Drehgebers, insbesondere Inkrementalgeber, einer elektrischen Maschine. Die Erfindung betrifft ferner eine Geberauswertung zur Durchführung des Verfahrens und eine elektrische Maschine.

Bei elektromotorisch angetriebenen Maschinen, wie beispielsweise Werkzeugmaschinen, ist ein Wissen um die aktuelle Phasenlage des Elektromotors für den präzisen Betrieb der Maschine nötig. So ist beispielsweise das genau Dosieren von Kunststoff bei einer Spritzgussmaschine oder der korrekte Druck mittels einer von Papierrollen gespeisten Offsetdruckmaschine lediglich möglich, wenn der aktuelle Winkels des Rotors bzgl. des Stators und/oder die aktuelle Rotationsgeschwindigkeit des Elektromotors bekannt ist. Üblicherweise ist daher an einer Welle des Rotors ein als Inkrementalgeber ausgestalteter Drehgeber angeflanscht, der eine bestimmte Strichzahl aufweist, zum Beispiel 256. Folglich werden bei einer Umdrehung des Rotors um 360° mittels des Inkrementalgebers 256 Pulse ermittelt. Um auch eine Auflösung von Winkeln, die geringer als 1,4° (360° / 256) zu erhalten, wird mittels des Drehzahlgebers eine Sinus- und eine Cosinus-Spur ausgegeben, deren jeweilige Periode einer Rotation des Rotors um 1,4° entspricht. Die Sinus- bzw. Cosinus-Spur wird dabei üblicherweise mittels zweier photoelektrischer oder magnetischer Sensoren aufgezeichnet, die zueinander um 90° bzgl. ihrer Periode versetzt sind, also in diesem Fall 0,35° der Rotorachse.

Die von den beiden Sensoren bereitgestellten Spuren entsprechen jedoch aufgrund von Fertigungstoleranzen des Drehzahlgebers nicht einer optimalen Sinus- bzw. Cosinus-Funktion. Daher ist es nötig, den Drehgeber vor Betrieb der elektrischen Maschine zu kalibrieren. Hierbei wird zwischen Amplituden-, Phasen- und Offsetfehlern unterschieden. Bei einem Auftrag der mittels des Drehgebers erstellten Messpunkte der beiden Spuren in einem Diagramm, wobei die x-Koordinate jedes aufgetragen Punktes dem Messwert der Cosinus-Spur und die y-Koordinate dem Messwert der Sinus-Spur entspricht, lägen die Messpunkte eines optimalen Drehgebers auf einem Einheitskreis um den Ursprung. Bei einer Verformung des Einheitskreises zu einer Ellipse liegt demnach ein Amplitudenfehler, bei einer Verkippung der Ellipse ein Phasenfehler und bei einer Verschiebung des Kreises bzgl. des Ursprungs ein Offsetfehler des Drehgebers vor.

Aus der DE 101 63 504 B4 ist ein Verfahren zur Kalibrierung des Drehgebers bekannt. Hierbei wird aus den beiden Spuren ein Messwert erstellt, in dem aus der Summe der Quadrate der beiden Spuren die Wurzel gezogen wird, also der Radius des Kreises ermittelt wird, sofern die Messpunkte in dem zuvor erwähnten Diagramm aufgetragen würden. In einem weiteren Schritt wird der zeitliche Verlauf des ermittelten Radiuses mittels einer Fouriertransformation iterativ analysiert und hieraus Korrekturfaktoren zur Behebung der jeweiligen Fehler ermittelt. Der sich mit den korrigierten Spuren in dem Diagramm ergebende Kreis weist folglich einen Mittelpunkt im Ursprung und einen konstanten Radius auf. Mit anderen Worten ist die Amplitude der korrigierten Spuren gleich, der Offset jeder der Spuren gleich 0, und die Phase zwischen den beiden Spuren entspricht 90°. Mit anderen Worten entspricht die Cosinus-Spur der um 90° verschobenen Sinus-Spur.

Aus US 2010/0321006 A1 ist ein Verfahren zur Kalibrierung eines Drehwinkelmessgeräts mit einem Magneten bekannt. Der Magnet weist beispielsweise eine Anzahl von Polen auf. Der Rotor wird mit einer konstanten Geschwindigkeit gedreht und der Winkel während einer Umdrehung aufgenommen. Während einer Umdrehung werden z.B. hundert Datenpunkte aufgenommen. Die aufgenommenen Datenpunkte werden von einem sich theoretisch ergebenden Winkelverlauf abgezogen.

Aus EP 2 058 628 A2 ist ein Verfahren zur Kalibrierung eines Drehgebers oder dergleichen bekannt. In einem ersten Schritt wird das Messsystem mit einer annähernd konstanten Geschwindigkeit gedreht, wobei jede Umdrehung in eine bestimmte Anzahl an Unterabschnitten unterteilt wird, und für jeden Unterabschnitt die Geschwindigkeit separat ermittelt wird. Eine annähernd konstante Geschwindigkeit ist erreicht, wenn sich der Durchschnitt der einzelnen Geschwindigkeiten vergleichsweise wenig ändert.

Aus US 6,598,196 B1 ist ein Verfahren zur Fehlerkorrektur eines Servosystems bekannt. Grundgedanke hierbei ist, dass die Abtastrate größer als das Doppelte der Regelfrequenz ist. In einem Testlauf mit im Wesentlichen konstanter Geschwindigkeit werden die frequenzabhängigen Fehler ermittelt und in einer Liste abgespeichert.

Aus DE 103 35 862 A1 ist ein Verfahren zum Kalibrieren eines inkrementellen Winkelgebers bekannt. Es wird hierfür eine Kalibriermessung vorgenommen und Abweichungen von einem (hypothetischen) äquidistanten Verhalten zur Bildung von Korrekturwerten herangezogen.

Der Erfindung liegt die Aufgabe zugrunde, die Winkelauflösung einer elektrischen Maschine zu verbessern.

Erfindungsgemäß wird die Aufgabe hinsichtlich eines Verfahrens durch die Merkmale des Anspruchs 1 gelöst. Vorteilhafte Weiterbildungen und Ausgestaltungen sind Gegenstand der Unteransprüche.

Das Verfahren sieht vor, dass die einen Drehgeber aufweisende elektrische Maschine zunächst auf eine bestimmte Geschwindigkeit geregelt wird. Die Regelung erfolgt beispielsweise mittels eines P- und/oder I-Reglers. Aus einer Sinus- oder Cosinus-Spur, vorzugsweise mittels beider, des als Inkrementalgeber ausgestalteten Drehgebers wird ein Winkel und hieraus der zeitliche Verlauf des Winkels eines Rotors bzgl. eines Stators der elektrischen Maschine ermittelt. Insbesondere ist der Winkel der Arcustangens des Bruches aus der Sinus- und der Cosinus-Spur. Pro Vollumdrehung des Rotors wird mittels des Drehgebers eine Anzahl von Sinus- und Cosinus-Schwingungen in der Sinus- bzw. Cosinus-Spuren geliefert, die einer Strichzahl entspricht, wobei die Periode der Sinus- und Cosinus-Schwingungen vorzugsweise gleich groß ist. Die Strichzahl ist beispielsweise gleich 1, so dass pro Umdrehung des Rotors lediglich eine einzige Periode des Sinus und eine einzige Periode des Cosinus in der Sinus- bzw. der Cosinus-Spur zur Verfügung gestellt wird. Um eine möglichst genaue Winkelauflösung zu erhalten, ist die Strichzahl jedoch größer und insbesondere gleich 256, 512 oder 1024.

In dem zeitlichen Verlauf des Winkels wird eine Schwingung ermittelt, deren Periode einem rationalen Bruch der Periode der Sinus- bzw. Cosinus-Spur entspricht. Mit anderen Worten ist die Frequenz der Schwingung ein ganzzahliges Vielfaches Produkt der bestimmten Geschwindigkeit mit der Strichzahl, wobei die bestimmte Geschwindigkeit insbesondere in U/s angegeben ist. Bei einer Einheitenwahl der bestimmten Geschwindigkeit in U/min entspricht die Frequenz einem Sechzigstel des Vielfachen des Produkts.

In einem weiteren Schritt wird ein Korrekturfaktor, geeigneterweise eine Anzahl hiervon, der Sinus- und/oder Cosinus-Spur bestimmt, mittels dessen die Amplitude, die Phase und/oder der Offset der Sinus- bzw. Cosinus-Spur angepasst wird. Der Korrekturfaktor ist dabei derart gewählt, dass bei einer Änderung der jeweiligen Spur um den Korrekturfaktor und einer erneuten Ermittlung des zeitlichen Winkelverlaufs mittels der um den Korrekturfaktor geänderten Spur die Amplitude der Schwingung des zeitlichen Winkelverlaufs unterhalb oder gleich eines Grenzwertes ist. Als Grenzwert wird beispielsweise 0 (Null) herangezogen. Mit anderen Worten weist der mittels der angepassten Sinus- bzw. Cosinus-Spur erstellte zeitliche Winkelverlauf keine Schwingung mit der betrachteten Frequenz mehr auf. Besonders bevorzugt wird als Grenzwert derjenige Wert der Amplitude herangezogen, bei dem trotz einer Veränderung des Korrekturfaktors keine Verkleinerung der Amplitude eintritt. Es wird somit zumindest ein lokales Minimum der Amplitude in Abhängigkeit des Korrekturfaktors als Grenzwert herangezogen.

Infolge dessen ergibt der Auftrag der angepassten Sinus- und Cosinus-Spur in einem Diagramm keinen Einheitskreis, wobei die x-Koordinate jedes aufgetragen Punktes einem Punkt der angepassten Cosinus-Spur und die y-Koordinate dem zugehörigen Punkt der angepassten Sinus-Spur entspricht. Vielmehr ist der Kreis bzgl. des Mittelpunkts verschoben und/oder zu einer verkippten Ellipse verformt.

Mittels eines derartigen Vorgehens wird die Winkelauflösung des Drehgebers verbessert. Zwar unterscheiden sich die angepasste Spuren und/oder die angepassten Spuren von einer optimalen Sinus- bzw. Cosinus-Funktion, jedoch wird hierdurch dem Umstand Rechnung getragen, dass etwaige Sensoren des Drehzahlgebers selbst keine optimalen Spuren bereitstellen, beispielsweise aufgrund von Hystereseeffekten. Vielmehr wird berücksichtigt, dass während einer Rotationsbewegung der elektrischen Maschine, bei der die Geschwindigkeit auf die bestimmte Geschwindigkeit geregelt ist, innerhalb des zeitlichen Winkelverlaufs im Wesentlichen keine Schwingungen auftreten. Zumindest ist es vergleichsweise unwahrscheinlich, dass eine Schwingung mit einer Frequenz von dem ganzzahligen Vielfachen des Produkts aus der bestimmten Geschwindigkeit und der Strichzahl auftreten, also dass eine periodische Störung der elektrischen Maschine vorliegt. Derartige Schwingungen werden somit aufgrund von Fertigungstoleranzen des Drehgebers hervorgerufen. Es handelt sich folglich um Artefakte, die mittels der vorgeschlagenen Kalibrierung beseitigt werden. Im Vergleich zum Stand der Technik wird dabei der zeitliche Winkelverlauf selbst betrachtet und hieraus, und in Folge dessen aus den beiden Spuren, die Artefakte entfernt. Es werden die mit den Artefakten belasteten Spuren eben nicht auf einer optimalen Sinus- bzw. Cosinus-Funktion abgebildet, mittels derer bei einem fehlerhaften Drehgeber lediglich eine falsche Winkelauflösung berechnet werden kann. Mit anderen Worten wird bewusst eine Kalibrierung der beiden Spuren herbeigeführt, bei der die Spuren nicht der jeweiligen optimalen Funktion entsprechen.

Das Verfahren wird zum Beispiel mittels einer Geberauswertung oder eines Steuergeräts automatisiert durchgeführt, insbesondere nach einer Erstinstallation der elektrischen Maschine, wobei der ermittelte Korrekturfaktor während der vollständigen Laufzeit der elektrischen Maschine verwendet wird. Alternativ oder in Kombination hierzu wird der Korrekturfaktor in bestimmten periodischen Abständen erneut ermittelt oder das Verfahren händisch ausgeführt.

Geeigneterweise erfolgt die Bestimmung des oder der Korrekturfaktoren iterativ. Beispielsweise wird nach der Ermittlung der Schwingung und der Feststellung, dass deren Amplitude größer als der Grenzwert ist, der jeweilige Korrekturfaktor auf einen vorbestimmten, insbesondere konstanten Wert gesetzt und mittels diesem die jeweilige angepasste Spur erneut erstellt, und zweckmäßigerweise hieraus der angepasste zeitliche Winkelverlauf ermittelt. Falls der angepasste zeitliche Winkelverlauf weiterhin die Schwingung aufweist, deren Amplitude weiterhin größer als der Grenzwert ist, wird dem Korrekturfaktor der bestimmte Wert hinzuaddiert und die jeweilige Spur erneut angepasst. Diese Schritte erfolgen insbesondere bis die Amplitude kleiner oder gleich dem Grenzwert ist.

Sofern als Grenzwert ein lokales Minimum der Amplitude in Abhängigkeit des Korrekturfaktors verwendet wird, erfolgt die Anpassung, also das Addieren des bestimmten Werts zu dem Korrekturfaktor, zweckmäßigerweise bis die Amplitude anwächst. In einem solchen Fall wird der Korrekturfaktor einmal um den bestimmten Wert erniedrigt und das Verfahren beendet. Mittels der iterativen Vorgehensweise ist eine Umsetzung des Verfahrens vergleichsweise effizient durchzuführen, da keine komplizierten Berechnungen zur Bestimmung des Korrekturfaktors selbst nötig sind. Zwar steigt die Anzahl der Rechenoperationen an, diese sind jedoch vergleichsweise einfach durchzuführen. Ferner ist nach bereits einer vergleichsweise geringen Anzahl von Iterationsschritten ein stabiler Korrekturfaktor gefunden.

In einer zweckdienlichen Ausführungsform der Erfindung wird als zeitlicher Winkelverlauf die Winkelgeschwindigkeit herangezogen. Mit anderen Worten wird die Schwingung innerhalb der Winkelgeschwindigkeit identifiziert, was vergleichsweise einfach möglich ist, da hierfür lediglich die Winkelgeschwindigkeit von der bestimmten Geschwindigkeit abgezogen werden muss, auf die die elektrische Maschine geregelt wird.

Besonders bevorzugt wird lediglich die Schwingung betrachtet, deren Frequenz gleich dem Produkt aus der Strichzahl und der bestimmten Geschwindigkeit ist. Es wird somit lediglich die Schwingung betrachtet, deren Periode dem Abstand zwischen zwei Strichzahlen des Drehzahlgebers entspricht. Folglich werden Artefakte berücksichtigt, die periodisch in der Sinus- bzw. Cosinus-Spur zwischen jeweils zwei Strichen des Drehzahlgebers auftauchen, wie dies beispielsweise bei Hystereseeffekten der Fall ist. Mit anderen Worten wird mittels einer derartigen Wahl der Frequenz jeder Bereich zwischen zwei Strichen im Wesentlichen gleich behandelt, wobei zur Ermittlung der Schwingung lediglich eine vergleichsweise geringe Anzahl von Messwerten zur Verfügung stehen muss ohne einen Informationsverlust zu befürchten. Ferner wird auf diese Weise die niedrigste mögliche Frequenz aus dem zeitlichen Winkelverlauf entfernt, die einerseits für das menschliche Gehör am auffälligsten ist, und die andererseits zu einer Gefährdung der elektrischen Maschine aufgrund einer Anregung führen könnte.

Zweckdienlicherweise entspricht der Korrekturfaktor dem Offset der Sinus- und/oder Cosinus-Spur. Mit anderen Worten wird mittels des Verfahrens somit lediglich der Offset der Sinus- bzw. der Cosinus-Spur verändert, um die Amplitude der Schwingung innerhalb des zeitlichen Winkelverlaufs zu verringern. Einerseits ist eine derartige Vorgehensweise vergleichsweise einfach, da zu der jeweiligen Spur lediglich ein konstanter Wert addiert oder abgezogen wird. Andererseits wird mittels der Offsetverschiebung der jeweiligen Spur eine Schwingung mit einer Frequenz, die gleich dem Produkt aus der bestimmten Geschwindigkeit und der Strichzahl ist, innerhalb des zeitlichen Winkelverlaufs verstärkt oder unterdrückt.

Geeigneterweise wird eine Phase der Schwingung bzgl. der Sinus- und/oder Cosinus-Spur bestimmt. Mit anderen Worten wird ermittelt, ob die betrachtete Schwingung der jeweiligen Spur voraus- oder nacheilt. Beispielsweise erfolgt die Bestimmung der Phase mittels einer Fourier-Analyse, insbesondere einer schnellen Fouriertransformation (fast FFT), die auf die Schwingung und/oder die jeweilige Spur angewandt wird. Auf diese Weise ist es ermöglicht, in einem Arbeitsschritt eine Anzahl von Schwingungen innerhalb des zeitlichen Winkelverlaufs zu betrachten.

Besonders bevorzugt erfolgt die Ermittlung der Phase jedoch mittels des Goertzel-Algorithmuses und die Frequenz der Schwingung ist vor Anwendung des Algorithmuses bestimmt. Aufgrund der Verwendung des Goertzel-Algorithmus ist die Anzahl von Rechenoperationen reduziert, nämlich auf im Wesentlichen dem 8-fachen der verwendeten Messwerte, wobei bevorzugt lediglich eine einzige Frequenz während des Verfahrens analysiert wird. Zweckdienlicherweise wird dabei in demselben Arbeitsschritt die Amplitude der Schwingung ermittelt. Mit anderen Worten wird lediglich einmal der Goertzel-Algorithmus auf den zeitlichen Winkelverlauf angewandt, um sowohl die Amplitude als auch die Phase der Schwingung zu erhalten. Es ist jedoch ebenso möglich, den Goertzel-Algorithmus lediglich für die Ermittlung der Amplitude der Schwingung zu verwenden, unabhängig von der Ermittlung der Phase.

Falls die Phasendifferenz der Schwingung und der Sinus-Spur kleiner als ± 90° ist, wird geeigneterweise der Offset der Sinus-Spur erhöht. Mit anderen Worten wird als Korrekturfaktor der Offset der Sinus-Spur herangezogen und dieser vergrößert, wenn die Schwingung im zeitlichen Winkelverlauf der Sinus-Spur um weniger als 90° vorauseilt bzw. um weniger als 90° hinterherhinkt. In gleicher Weise wird zum Beispiel mit der Cosinus-Spur verfahren, um diese zu kalibrieren. Insbesondere falls die Anpassung der Spuren iterativ erfolgt, wird der jeweilige Offset um einen bestimmten, vorher festgelegten Wert verändert, also erhöht oder erniedrigt. Auf diese Weise ist eine vergleichsweise einfache Ermittlung des Korrekturfaktors ermöglicht, ohne dass aufwändige Rechnungen getätigt werden müssen.

Alternativ oder besonders bevorzugt in Kombination hierzu wird der Offset der Sinus-Spur und/oder der Cosinus-Spur verringert, falls die Schwingung im zeitlichen Winkelverlauf der jeweiligen Spur um mehr als 90°, und zweckmäßigerweise weniger als 270°, vorauseilt. Auch hier ist die Ermittlung des Korrekturfaktors aufgrund der robusten Vorgehensweise vereinfacht. Zweckmäßigerweise wird sowohl bei der Sinus-Spur als auch der Cosinus-Spur je nach ermittelter Phasenlage der Offset entweder erhöht oder erniedrigt. Mit anderen Worten werden beiden Spuren in Abhängigkeit der Phasenlage der Schwingung verändert ohne dazwischen eine Neuberechnung des zeitlichen Winkelverlaufs vorzunehmen. Somit wird bei einer Anpassung beider Spuren die Amplitude der Schwingung vergleichsweise umfangreich reduziert. Sofern das Verfahren iterativ erfolgt, sind folglich lediglich vergleichsweise wenige Iterationsschritte bis zum Beenden des Verfahrens notwendig.

Beispielsweise werden in einem weiteren Verfahrensschritt die Amplituden der beiden Spuren aufeinander angepasst. Mit anderen Worten sind die Amplituden der Sinus- und der Cosinus-Spur gleichgroß. Die Anpassung erfolgt vorzugsweise mittels eines Minimum-Maximum-Vergleichs der beiden Spuren. Folglich wird bei jeder Spur sowohl das Maximum als auch das Minimum ermittelt, und die Differenz zwischen diesen als doppelte Amplitude herangezogen. Mittels Multiplikation der einzelnen Messwerte der Spuren mit einem geeigneten Faktor wird entweder die Sinus- oder die Cosinus-Spur derart angepasst, dass die Differenz zwischen dem nunmehr neuen Maximum zu dem neuen Minimum der entsprechenden Differenz der jeweils anderen Spur entspricht. Alternativ werden die Amplituden der beiden Spuren auf eine Hilfsgröße angepasst. In zweckmäßiger Weise erfolgt die Anpassung der Amplituden vor der ersten Berechnung des Winkels der elektrischen Maschine anhand der Sinus- und/oder Cosinus-Spur. Vielmehr werden die nunmehr amplitudenangeglichen Sinus- und/oder Cosinus-Spur zur Ermittlung des Korrekturfaktors verwendet. Mit anderen Worten ergeben die in dem erwähnten kartesischen Koordinatensystem aufgetragenen einzelnen einander zugeordneten Punkte der beiden Spuren einen Kreis und vorzugsweise den Einheitskreis.

Mittels der Anpassung der Amplituden aufeinander und insbesondere auf eine vorher festgelegte Amplitude werden weitere Schwingungen im zeitlichen Winkelverlauf vermieden, oder zumindest reduziert, deren Frequenz dem doppelten des Produktes aus der bestimmten Geschwindigkeit und der Strichzahl entspricht. Beispielsweise werden die Amplituden nach erfolgter Anpassung nicht weiter verändert. Alternativ hierzu ist es ebenso möglich, die Amplitude als, insbesondere zusätzlichen, Korrekturfaktor zu verwenden, und mittels einer Anpassung der Amplitude eine Schwingung im zeitlichen Winkelverlauf mit einer Frequenz von dem doppelten des Produktes aus der bestimmten Geschwindigkeit und der Strichzahl zu vermeiden oder zumindest die Amplitude dieser Schwingung zu verringern.

Zweckmäßigerweise wird vor der ersten Bestimmung des Winkels anhand mindestens einer der beiden Spuren der Offset der Sinus- und/oder Cosinus-Spur dahingehend verändert, dass das Integral über die jeweilige Spur entlang einer Periode gleich Null (0) ist. Mit anderen Worten wird der Offset der Sinus- bzw. der Cosinus-Spur auf den Wert gesetzt, bei dem die entsprechende Spur um die jeweilige Nulllinie schwingt. Folglich befindet sich der Mittelpunkt des aus den Werten der Sinus- und Cosinus-Spur gebildeten Kreis in dem erwähnten kartesischen Koordinatensystem auf dessen Ursprung. Die Ermittlung dieses Offsets, mittels dessen das erste Mal der Winkel und der erste Winkelverlauf bestimmt werden, erfolgt beispielsweise mittels Integrieren oder eines Minimum-Maximum-Vergleichs. Bei diesem wird die jeweilige Spur dahingehend verschoben, dass der Betrag des Minimums dem Betrag des Maximums der jeweiligen Spur entspricht. Geeigneterweise erfolgt dieses erste Setzen des Offsets in einem Schritt mit der Amplitudenanpassung, sofern diese erfolgt. Aufgrund der ersten Wahl des Offsets ist bei einer anschließenden Ermittlung des Korrekturfaktors der Betrag des Korrekturfaktors vergleichsweise gering, sofern der Offset als Korrekturfaktors herangezogen wird. Insbesondere falls die Anpassung iterativ erfolgt ist bei einer ersten Wahl des Offsets dahingehend, dass das Integral über die Periode gleich Null (0) ist, lediglich eine geringe Anzahl von Iterationsschritten erforderlich.

Alternativ oder in Kombination zur Anpassung der Amplitude und/oder des Offsets vor der ersten Berechnung des Winkels und dessen zeitlichen Verlaufs wird die Phase zwischen den beiden Spuren angepasst, so dass die Cosinus-Spur einer um 90° verschobenen Sinus-Spur entspricht. Vorzugsweise wird vor der ersten Berechnung des Winkels, des zeitlichen Verlaufs und der Bestimmung einer Schwingung innerhalb dessen die Sinus-Spur und die Cosinus-Spur, die hierfür verwendet werden, dahingehend angepasst, dass der zweidimensionale Auftrag der mittels der beiden Spuren erstellten Werte in dem erwähnten kartesischen Koordinatensystem, bei dem der Cosinus und der Sinus jeweils eine Achse bilden, einen um den Ursprung konzentrischen Einheitskreis ergeben. Danach wird das erste Mal der der Winkel und der zeitliche Winkelverlauf gebildet und hierin die Schwingung ermittelt, wobei hierfür die angepassten Spuren verwendet werden. Je nach der Frequenz der Schwingung wird in einem weiteren Schritt entweder der Offset, die Amplitude oder die Phase als Korrekturfaktor weiter angepasst, so dass die Amplitude der Schwingung unterhalb des Grenzwertes oder gleich diesem ist.

Zweckmäßigerweise wird als bestimmte Geschwindigkeit, auf die die elektrische Maschine geregelt wird, eine konstante Geschwindigkeit herangezogen. Beispielsweise ist die bestimmte Geschwindigkeit derart gewählt, dass die Frequenz der Schwingung zwischen 50 Hz und 200 Hz liegt. Falls der Drehgeber eine Strichzahl von 1024 aufweist, und als Frequenz das Produkt aus der bestimmten Geschwindigkeit und der Strichzahl herangezogen wird, liegt die bestimmte Geschwindigkeit somit zwischen 2,9 Umdrehungen pro Minute (U/min) und 12 U/min. Auf diese Weise ist sichergestellt, dass der Rotor der elektrischen Maschine im Wesentlichen gleichmäßig läuft und die in dem zeitlichen Winkelverlauf bestimmte Schwingung nicht aufgrund einer Beschleunigung oder Abbremsung des Rotors hervorgerufen wird.

Beispielsweise erfolgt die Regelung der elektrischen Maschine auf die bestimmte Geschwindigkeit auf einem Prüfstand und die tatsächliche Geschwindigkeit, die mit der bestimmte Geschwindigkeit verglichen wird, wird anhand eines weiteren, bereits kalibrierten Drehzahlmessers ermittelt. Zweckmäßigerweise jedoch erfolgt die Regelung der elektrischen Maschine auf die bestimmte Geschwindigkeit mittels des zu kalibrierenden Drehzahlgebers selbst, da der mittels der Kalibrierung zu beseitigende Fehler vergleichsweise klein ist.

Die vorzugsweise als Steuergerät ausgebildete Geberauswertung ist, insbesondere schaltungs- und/oder programmtechnisch dazu eingerichtet und vorgesehen, das Verfahren durchzuführen. Hierfür weist das Steuergerät beispielsweise einen Speicher auf, von dem das Programm in einen Mikroprozessor geladen wird. Alternativ ist der Mikroprozessor bereits als anwendungsspezifischer Schaltkreis (ASIC) ausgestaltet. Zweckmäßigerweise umfasst die Geberauswertung einen Speicher zur Aufnahme der von dem Drehgeber gelieferten Sinus- und Cosinus-Spur, der zum Beispiel als Ringspeicher ausgestaltet ist. Ferner weist die Geberauswertung bevorzugt einen Speicher zur Hinterlegung des jeweiligen Korrekturfaktors auf.

Die Geberauswertung bzw. das Steuergerät ist beispielsweise Bestandteil einer elektrischen Maschine mit einem Drehgeber, oder die elektrische Maschine ist mittels des Verfahrens kalibriert, im speziellen der Drehgeber. Beispielsweise ist hierfür der ermittelte Korrekturfaktor in einem Speicher des Drehgebers oder einer Steuerelektronik der elektrischen Maschine hinterlegt. Zumindest weist die als Elektromotor ausgestaltete elektrische Maschine eine Schwankung der mittels der Sinus- und/oder Cosinus-Spur berechneten Winkelgeschwindigkeit um die tatsächliche Geschwindigkeit eine Schwankung von weniger als 2° pro Sekunde auf, insbesondere bei einer tatsächlichen Geschwindigkeit von zwischen 50 U/min und 70 U/min. Beispielsweise weist der Elektromotor ein Drehmoment zwischen 300 und 1000 Nm und/oder eine Leistung zwischen 5 kW und 150 kW auf. Zum Beispiel liegt die bestimmte Geschwindigkeit während des Betriebs zwischen 50 U/min und 1000 U/min. Folglich ist es möglich, den Elektromotor bei einer Offsetdruckmaschine zu verwenden, die z.B. mittels Endlospapier gespeist wird, wobei dennoch aufgrund des Wissens um die aktuelle Winkelposition des Rotors und dessen Geschwindigkeit ein präzises Druckbild erstellt werden kann. Auch ist bei einem Einsatz des Elektromotors bei einer Spritzgussmaschine die exakte Dossierung des zu spritzenden Materials ermöglicht. Insbesondere ist der Elektromotor Bestandteil einer Offsetdruckmaschine oder einer Spritzgussmaschine.

Nachfolgend wird ein Ausführungsbeispiel der Erfindung anhand einer Zeichnung näher erläutert. Darin zeigen:
- Fig. 1: schematisch einen Elektromotor mit einem Drehgeber,
- Fig. 2: ein Verfahren zur Kalibrierung des Drehgebers,
- Fig. 3a-c: Zwischenschritte des Verfahrens, und
- Fig. 4: einen alternativen zeitlichen Winkelverlauf.

Einander entsprechende Teile sind in allen Figuren mir den gleichen Bezugszeichen versehen.

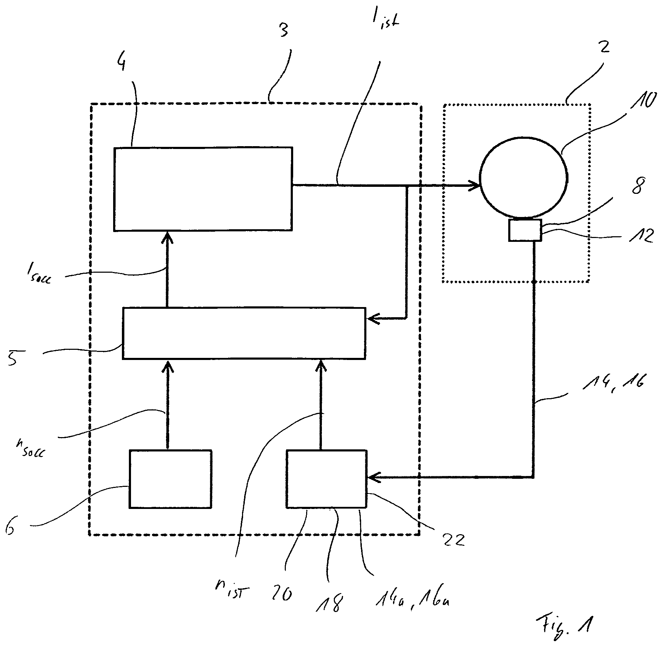

In Fig. 1 ist schematisch ein Elektromotor 2 dargestellt, der mittels eines Umrichters 3 mit einem Dreiphasenwechselstrom lᵢₛₜ versorgt wird. Der Umrichter 3 selbst wird mittels eines Stromreglers 4 und eines Drehzahlreglers 5 betrieben, dem sowohl der Wert des Wechselstrom lᵢₛₜ als auch eine aktuelle Drehzahl nᵢₛₜ des Elektromotors 2 und eine bestimmte Geschwindigkeit nₛₒₗₗ zugeführt wird. Aus diesen Eingaben wird ein Sollstrom lₛₒₗₗ berechnet und dem Stromregler 4 übermittelt, nach dessen Vorgaben nicht dargestellte Stromventile des Umrichters 3 betätigt werden. Die bestimmte Geschwindigkeit nₛₒₗₗ wird dabei je nach Abhängigkeit von Anforderungen an den Elektromotor 2 mittels einer Sollwertvorgabeeinheit 6 vorgegeben oder aber auch, falls ein Kalibrierungslauf des Elektromotors 2 gestartet wird.

Die aktuelle Drehzahl nᵢₛₜ wird mittels eines nach dem einem photoelektrischen Prinzip arbeitenden Inkrementalgebers 8 ermittelt, der B-seitig an einer Welle einer Rotor-Stator-Einheit 10 angeflanscht ist. Der Inkrementalgeber 8 weist eine Strichzahl 12 auf, die 512 beträgt, wobei pro Umdrehung des Inkrementalgebers 8 eine Anzahl von 512 Impulsen erfasst und sowohl eine Sinus-Spur 14 als auch eine Cosinus-Spur 16 erstellt wird, wobei die Frequenz der Schwingungen in den jeweiligen Spuren 14, 16 dem Produkt aus der aktuellen Drehzahl nᵢₛₜ und der Strichzahl 12 entspricht. Mit anderen Worten wird pro Vollumdrehung des Rotors innerhalb des Stators mittels des Inkrementalgebers pro Sinus- bzw. Cosinus-Spur 14, 16 eine Anzahl von 512 Vollperioden aufgezeichnet.

Die Sinus-Spur 14 und die Cosinus-Spur 16 werden einer Geberauswertung 18 zugeführt und in einem Ringspeicher abgelegt. Mittels der Geberauswertung 18 wird der Inkrementalgeber 8 kalibriert, indem die aufgenommene Sinus-Spur 14 und Cosinus-Spur 16 in eine kalibrierte Sinus-Spur 14a und eine kalibrierte Cosinus-Spur 16a überführt werden. Hierfür ist ein Satz von Korrekturfaktoren 20 in einem Speicher der Geberauswertung 18 hinterlegt, die bei dem Kalibrierungslauf des Elektromotors 2 mittels des der Geberauswertung 18 ermittelt werden. Aufgrund der Kalibrierung der elektrischen Maschine 2 ist eine hochpräzise Ermittlung der Lage des Rotors bzgl. des Stators und hieraus eine Berechnung einer Winkelgeschwindigkeit 22 möglich, die um die tatsächliche aktuelle Drehzahl nᵢₛₜ um weniger als 2° pro Sekunde schwankt. Dabei ist die Drehzahl nᵢₛₜ zwischen einer und zehn Umdrehungen pro Sekunde, wobei das aufgebrachte Drehmoment bei 400 Nm und die Leistung bei 35 kW liegt. Aufgrund dessen ist es möglich, den Elektromotor 2 bei einer Offsetdruckanlage zu verwenden, mittels derer beispielsweise Zeitungen gedruckt werden.

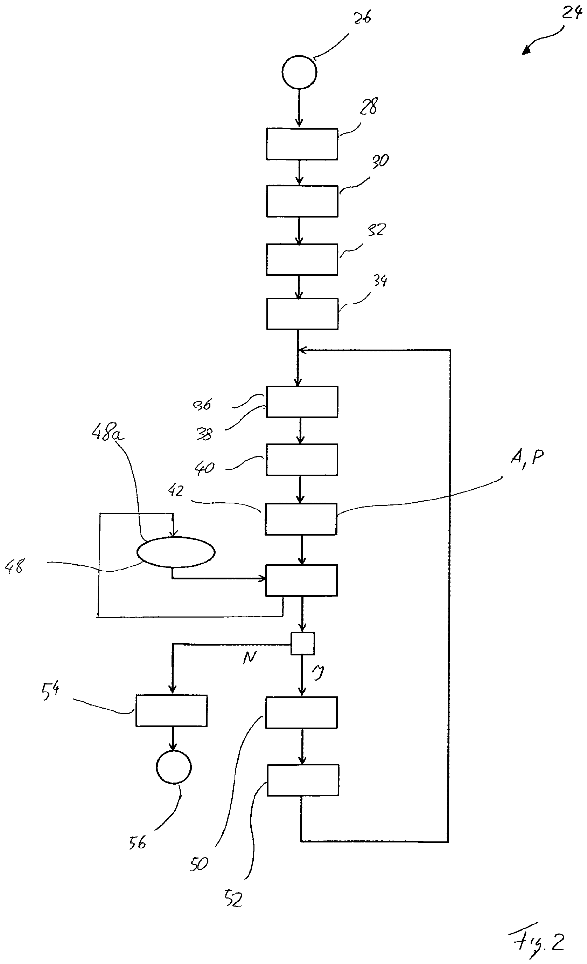

In Fig. 2 ist in einem Flussdiagramm schematisch ein Verfahren 24 zum Kalibrieren des Inkrementalgebers 8 gezeigt. Nach einem Startereignis 26 das automatisch nach der Montage des Elektromotors 2 oder händisch von einer Bedienperson des Elektromotors 2 ausgelöst wird, wird der Elektromotor 2 in einem Regelschritt 28 auf die bestimmte Geschwindigkeit nₛₒₗₗ mittels des Drehzahlreglers 5 geregelt, wobei die bestimmte Geschwindigkeit nₛₒₗₗ von der Sollwertvorgabeeinheit 6 zur Verfügung gestellt wird. Die bestimmte Geschwindigkeit nₛₒₗₗ ist konstant und beträgt eine Umdrehungen pro Sekunde oder 60 U/min. Folglich wird jede 1/512 s (Sekunde) ein mittels des Inkrementalgebers 8 ermittelter Strich erwartet. Falls beispielsweise zwischen zwei aufeinander folgenden Strichen eine Zeit von mehr als 2 Millisekunden vergeht, wird mittels der Regelung 6 die Drehzahl erhöht, falls der zeitliche Abstand hingegen geringer als 1,5 Millisekunden ist, ist die Drehzahl erniedrigt, bis der Abstand einem 1/512 s entspricht.

Sobald die aktuelle Drehzahl nᵢₛₜ hinreichend genau der bestimmten Geschwindigkeit nₛₒₗₗ entspricht wird in einem Aufnahmeschritt 30 der Sinus- und Cosinus-Spur 14, 16 mittels des Inkrementalgebers 8 erfasst und in den Ringspeicher der Geberauswertung 18 abgelegt. In einem Offset-Anpassungsschritt 32 und einem Amplituden-Anpassungsschritt 34 wird sowohl die Sinus-Spur 14 als auch die Cosinus-Spur 16 dahingehend angepasst, dass deren jeweiliger Offset O einem Wert von Null (0) und die jeweilige Amplitude A einem Wert von 1.024 bit entspricht. Mit anderen Worten entspricht das Minimum der Amplituden gleichgerichteten Sinus- und der Cosinus-Spur 14, 16 einem Wert von - 1.024 und das Maximum 1.024.

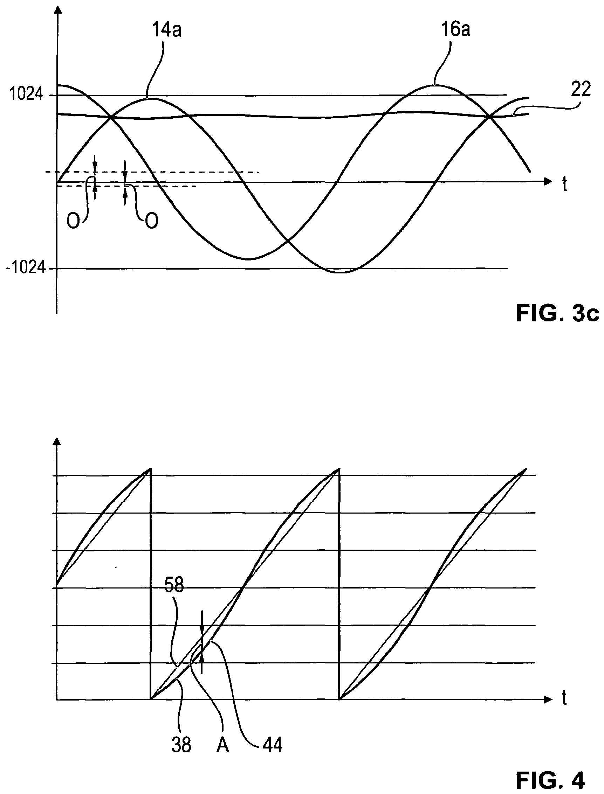

In einem sich daran anschließenden Winkelermittlungsschritt 36 wird ein Winkel 38 des Rotors bzgl. des Stators berechnet (Fig. 4). Dabei wird Arctan(Sinus-Spur 14/Cosinus-Spur 16) als Winkel 38 herangezogen. Der Winkel 38 wird für jeden Messwert der Sinus- und Cosinus-Spur 14, 16 erstellt, so dass hieraus die Winkelgeschwindigkeit 22 als zeitlicher Winkelverlauf in einem Geschwindigkeitsermittlungsschritt 40 ermittelt werden kann. Hierfür wird die Differenz zweier aufeinander folgender Winkel 38 gebildet und durch den zeitlichen Abstand zwischen den zur Ermittlung der Winkel 38 verwendeten Punkte der Sinus- und Cosinus-Spur 14, 16 geteilt.

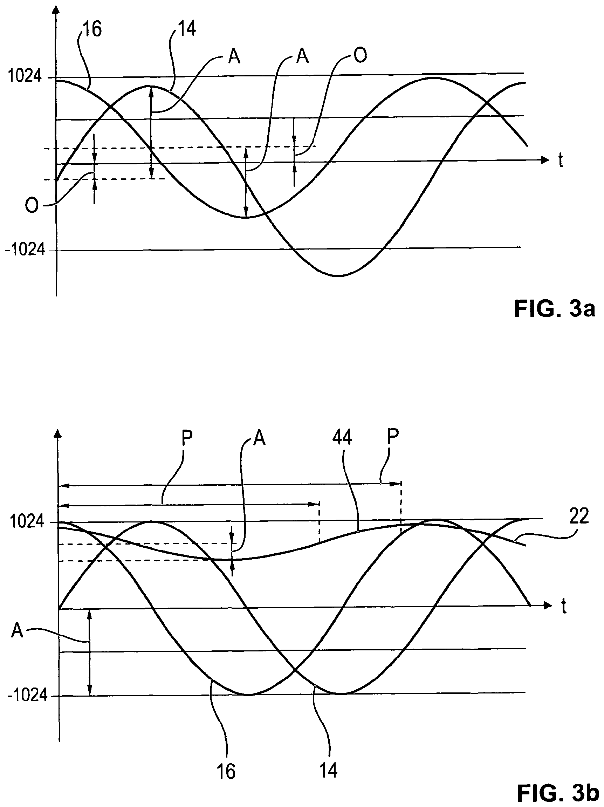

In einem Analyseschritt 42 wird die Winkelgeschwindigkeit 22 mittels des Goertzel-Algorithmus analysiert, wobei als Frequenz das Produkt der bestimmten Geschwindigkeit nₛₒₗₗ und der Strichzahl 12 verwendet wird. Folglich wird in dem Analyseschritt 42 die Amplitude A und eine Phase P einer Schwingung 44 (Fig. 3b) mit der Frequenz des Produkts der bestimmten Geschwindigkeit nₛₒₗₗ und der Strichzahl 12 in der Winkelgeschwindigkeit 22 ermittelt. Ferner wird in dem gleichen Schritt 42 die Sinus- und Cosinus-Spur 14, 16 mittels des Goertzel-Algorithmus untersucht und deren jeweilige Phase P bestimmt.

In einem sich daran anschließenden Vergleichsschritt 46 wird die Amplitude A der Schwingung 44 mit einem Vergleichswert 48a verglichen, der bei Start des Verfahrens 24, also im Wesentlichen gleich nach Eintritt des Startereignisses 26, zunächst auf einen Maximalwert gesetzt wird, zum Beispiel 1024 bit. Falls die Amplitude A der Schwingung 44 kleiner als der Vergleichswert 48a ist, wird der bisherige Vergleichswert 48a mit der Amplitude A der Schwingung 44 überschrieben, und in einem Phasenvergleichsschritt 50 die in dem Analyseschritt 46 ermittelten Phasen P der Schwingung 44 bzgl. der Sinus- und Cosinus-Spur 14, 16 verglichen.

Wenn die Phase P der Schwingung 44 bzgl. der Sinus-Spur 14 größer als + 270° und kleiner als + 90° ist wird der Offset O der Sinus-Spur 14 in einem Offset-Korrekturschritt 52 erhöht. Falls die Phase P der Schwingung 44 in der Winkelgeschwindigkeit 22 bzgl. der Sinus-Spur 14 als größer + 90° und kleiner als + 270° ist, wird der Offset O der Sinus-Spur 14 um 1 bit erniedrigt. In diesem Fall entspricht das Maximum der Sinus-Spur 14 einem Wert von 1.023 und das Minimum -1.025. In dem Offset-Korrekturschritt 52 wird neben der Sinus-Spur 14 auch die Cosinus-Spur 16 über deren Offset O korrigiert, wobei ebenfalls der Offset O erhöht wird, falls die Phase P der Schwingung 44 bzgl. der Cosinus-Spur 16 zwischen - 90° und + 90° liegt, also die Schwingung 44 der Cosinus-Spur 16 um weniger als 90° hinterher oder vorweg eilt. In den übrigen Fällen wird der Offset O der Cosinus-Spur 16 erniedrigt, und zwar um 1 bit.

Nach der Anpassung der beiden Spuren 14, 16 in dem Ringspeicher der Geberauswertung 18 mittels des jeweiligen Offsets O wird in einer iterativen Weise erneut der Winkelermittlungsschritt 36 ausgeführt und der Winkel 38 ermittelt, jedoch anhand der angepassten Spuren 14, 16. Hiernach wird mittels der neuerstellten Winkel 38 die Winkelgeschwindigkeit 22 und die Amplitude A der Schwingung 44 bestimmt und mit dem neu erstellten Vergleichswert 48a verglichen, also der Amplitude A der Schwingung 44 vor der letzten Anpassung der Offsets O der Sinus- und Cosinus-Spur 14, 16. Falls die nunmehr vorhandene Amplitude A weiterhin kleiner oder gleich dem Vergleichswert 48a ist, wird erneut der Offset O der beiden Spuren 14, 16 um jeweils ein bit erhöht oder erniedrigt, je nach Phasenlage der Schwingung 44 zur jeweiligen Spur 14, 16.

Sofern die Amplitude A größer als der Vergleichswert 48a ist, wird der Vergleichswert 48a als ein Grenzwert 48 herangezogen. Mit anderen Worten ist der Grenzwert 48 zumindest ein lokales Minimum der Amplitude A der Schwingung 44 in Abhängigkeit der Offsets O der Sinus- und Cosinus-Spur 14, 16. Falls die Amplitude A der Schwingung 44 kleiner oder gleich diesem Grenzwert 44 ist, wird in einem Hinterlegungsschritt 50 in dem Speicher der Geberauswertung 18 die in den Anpassungsschritten 32, 34, 52 ermittelten Amplituden und Offsets A, O als Korrekturfaktor 20 hinterlegt. Die Offsets O der Sinus- und Cosinus-Spur 14, 16 entsprechen dabei den Offsets O vor der Ausführung des zeitlich letzten Offset-Korrekturschritts 52. Nach dem Ablegen der Korrekturfaktoren 20 in den Speicher erreicht das Verfahren 24 ein Ende 56, und die Korrekturfaktoren 20 werden nunmehr zur Berechnung der korrigierten Sinus- und Cosinus-Spur 14a, 16a verwendet.

Fig. 3a ist der zeitliche Verlauf der Sinus-Spur 14 und der Cosinus-Spur 16 dargestellt, wie diese nach dem Aufnahmeschritt 30 vorliegen. So weist die Sinus-Spur 14 einen negativen Offset O und eine Amplitude A auf, die größer als 1.024 bit ist. Die Amplitude A der Cosinus-Spur 16 hingegen ist kleiner als 1.024 bit und deren Offset O positiv. In Fig. 3b sind die nach den Anpassungsschritten 32, 34 amplituden- und offsetgleich gerichteten Sinus- und Cosinus-Spuren 14, 16 dargestellt deren jeweiliger Offset O einem Wert von Null (0) und deren Amplitude 1.024 bit entspricht. Die Bestimmung der beiden Parameter A, O jeder Spur 14, 16 erfolgt entweder mittels Integrieren über eine Periode, eines Minimum/Maximum-Vergleichs oder einem Anwenden des Goertzel-Algorithmus auf die jeweilige Spur 14, 16. In der berechneten Winkelgeschwindigkeit 22 deren Skalierung zur Darstellung im Diagramm verändert wurde, ist die Schwingung 44 mit der Amplitude A erkennbar. Die Phase P der Schwingung 44 bzgl. der Sinus-Spur 14 beträgt in etwa 260° und die Phase P der Schwingung 44 bzgl. der Cosinus-Spur 16 in etwa 350°. Folglich wird im Offset-Korrekturschritt 56 der Offset O der Sinus-Spur 14 erniedrigt und der Offset O der Cosinus-Spur 16 zunächst erhöht.

In Fig. 3c ist der Verlauf der kalibrierten Sinus- und Cosinus-Spur 14a, 16a gezeigt, bei denen innerhalb der Winkelgeschwindigkeit 22 keine Schwingung 44 mehr erkennbar ist. Die korrigierte Sinus-Spur 14a, weist einen leicht negativen Offset O und die korrigierte Cosinus-Spur 16a einen positiven Offset O auf, wobei diese Offsets O neben den jeweiligen Amplituden A als Korrekturfaktor 20 im Hinterlegungsschritt 50 in der Geberauswertung 18 hinterlegt werden.

In Fig. 4 ist ein alternativer zeitlicher Winkelverlauf 38 mit der Schwingung 44 gezeigt. Als zeitlicher Winkelverlauf wird der jeweilige Winkel 38 selbst herangezogen, so dass sich zwischen den einzelnen Strichen des Inkrementalgebers 8 ein sägezahnförmiger verlaufender optimaler Winkel 58 ergeben würde. Um diesen schwankt der berechnete Winkel 38 um die Amplitude A der Schwingung 44. Die Erfindung ist nicht auf das vorstehend beschriebene Ausführungsbeispiel beschränkt. Vielmehr können auch andere Varianten der Erfindung von dem Fachmann hieraus abgeleitet werden, ohne den durch die Ansprüche definierten Gegenstand der Erfindung zu verlassen. Insbesondere sind ferner alle im Zusammenhang mit dem Ausführungsbeispiel beschriebene Einzelmerkmale auch auf andere Weise miteinander kombinierbar, ohne den durch die Ansprüche definierten Gegenstand der Erfindung zu verlassen.

### Bezugszeichenliste

- 2: Elektromotor
- 3: Umrichter
- 4: Stromregler
- 5: Drehzahlregler
- 6: Sollwertvorgabeeinheit
- 8: Inkrementalgeber
- 10: Rotor-Stator-Einheit
- 12: Strichzahl
- 14: Sinus-Spur
- 14a: kalibrierte Sinus-Spur
- 16: Cosinus-Spur
- 16a: kalibrierte Cosinus-Spur
- 18: Geberauswertung
- 20: Korrekturfaktor
- 22: Winkelgeschwindigkeit
- 24: Verfahren
- 26: Startereignis
- 28: Regelschritt
- 30: Aufnahmeschritt
- 32: Offset-Anpassungsschritt
- 34: Amplituden-Anpassungsschritt
- 36: Winkelermittlungsschritt
- 38: Winkel
- 40: Geschwindigkeitsermittlungsschritt
- 42: Analyseschritt
- 44: Schwingung
- 46: Vergleichsschritt
- 48: Grenzwert
- 48a: Vergleichswert
- 50: Phasenvergleichsschritt
- 52: Offset-Korrekturschritt
- 54: Hinterlegungsschritt
- 56: Ende

- A: Amplitude
- lᵢₛₜ: Wechselstrom
- lₛₒₗₗ: Sollstrom
- nᵢₛₜ: aktuelle Drehzahl
- nₛₒₗₗ: bestimmte Geschwindigkeit
- O: Offset
- P: Phase

## Patentansprüche

1. Verfahren (24) zum Kalibrieren eines eine Sinus-Spur (14) und eine Cosinus-Spur (16) ausgebenden als Inkrementalgeber ausgestalteten Drehgebers (8) einer elektrischen Maschine (2), der eine Strichzahl (12) aufweist, bei dem
- die elektrische Maschine (2) auf eine bestimmte Geschwindigkeit (nₛₒₗₗ) geregelt wird,
- ein Winkel (38) der elektrischen Maschine (2) anhand der Sinus-Spur (14) und/oder der Cosinus-Spur (16) bestimmt wird,
- hieraus ein zeitlicher Winkelverlauf (22) ermittelt wird,
**dadurch gekennzeichnet, dass**
- eine Schwingung (44) in dem zeitlichen Winkelverlauf (22) mit einer Frequenz von im Wesentlichen einem ganzzahligen Vielfachen des Produkts aus der bestimmten Geschwindigkeit (nₛₒₗₗ) und der Strichzahl (12) ermittelt wird, und
- hieraus ein Korrekturfaktor (20) der Sinus-Spur (14) und/oder der Cosinus-Spur (16) abgeleitet wird, mittels dessen die Amplitude, die Phase und/oder der Offset der Sinus- bzw. Cosinus-Spur (14, 16) angepasst wird,
- wobei der Korrekturfaktor (20) derart gewählt wird, dass bei einer Änderung der jeweiligen Spur (14, 16) um den Korrekturfaktor (20) und einer erneuten Ermittlung des zeitlichen Winkelverlaufs mittels der um den Korrekturfaktor (20) geänderten Spur (14a, 16a) die Amplitude (A) der Schwingung (44) des zeitlichen Winkelverlaufs (22) kleiner oder gleich einem Grenzwert (48) ist.

2. Verfahren (24) nach Anspruch 1,
**dadurch gekennzeichnet,**
**dass** die Bestimmung des Korrekturfaktors (20) iterativ erfolgt, insbesondere mittels Neubestimmung des Winkels (38) und des zeitlichen Winkelverlaufs (22).

3. Verfahren (24) nach Anspruch 1 oder 2,
**dadurch gekennzeichnet,**
**dass** als zeitlicher Winkelverlauf (22) die Winkelgeschwindigkeit, als Frequenz das Produkt aus der bestimmten Geschwindigkeit (nₛₒₗₗ) und der Strichzahl (12) und/oder als Korrekturfaktor (20) der Offset (O) der Sinus-Spur (14) bzw. der Cosinus-Spur (16) herangezogen wird.

4. Verfahren (24) nach einem der Ansprüche 1 bis 3,
**dadurch gekennzeichnet,**
**dass** eine Phase (P) der Schwingung (44) bzgl. der Sinus-Spur (14) und/oder der Cosinus-Spur (16) bestimmt wird, insbesondere mittels des Goertzel Algorithmus.

5. Verfahren (24) nach einem der vorhergehenden Ansprüche,
**dadurch gekennzeichnet,**
**dass** der Offset (O) der Sinus-Spur (14) und/oder der Cosinus-Spur (16) erhöht wird, falls die Phase (P) bzgl. der Sinus-Spur (14) bzw. der Cosinus-Spur (16) kleiner als ± 90° ist.

6. Verfahren (24) nach einem der vorhergehenden Ansprüche,
**dadurch gekennzeichnet,**
**dass** der Offset (O) der Sinus-Spur (14) und/oder der Cosinus-Spur (16) verringert wird, falls die Phase (P) bzgl. der Sinus-Spur (14) bzw. der Cosinus-Spur (16) größer als ± 90° ist.

7. Verfahren (24) nach einem der vorhergehenden Ansprüche,
**dadurch gekennzeichnet,**
**dass** die Amplituden (A) der Sinus-Spur (14) und der Cosinus-Spur (16) aufeinander angepasst werden.

8. Verfahren (24) nach einem der Ansprüche 1 bis 7,
**dadurch gekennzeichnet,**
**dass** vor der ersten Bestimmung des Winkels (38) der Offset (O) der Sinus-Spur (14) und/oder der Cosinus-Spur (16) derart festgelegt wird, dass das Integral über eine Periode gleich Null ist, insbesondere mittels eines Minimum/Maximum-Vergleichs.

9. Verfahren (24) nach einem der Ansprüche 1 bis 8 ,
**dadurch gekennzeichnet,**
**dass** als bestimmte Geschwindigkeit (nₛₒₗₗ) eine konstante Geschwindigkeit gewählt wird.

## Claims

1. Method (24) for calibrating a rotary encoder (8) of an electric machine (2), said rotary encoder (8) outputting a sinusoidal track (14) and a cosine track (16), being designed as an incremental transmitter and having a line count (12), in which
- the electric machine (2) is controlled to a specific speed (nₛₒₗₗ),
- an angle (38) of the electric machine (2) is determined using the sinusoidal track (14) and/or the cosine track (16),
- a temporal angular course (22) is identified from this angle (38),
**characterised in that**
- a vibration (44) in the temporal angular course (22) having a frequency of substantially one integral multiple of the product of the determined speed (nₛₒₗₗ) and the line count (12) is identified, and
- a correction factor (20) of the sinusoidal track (14) and/or the cosine track (16) is derived from this, by means of which the amplitude, the phase and/or the offset of the sinusoidal track or cosine track (14, 16) is adapted,
- wherein the correction factor (20) is chosen in such a manner that, in the event of a change in the respective track (14, 16) by the correction factor (20) and a new identification of the temporal angular course by means of the track (14a, 16a), said track (14a, 16a) being changed by the correction factor (20), the amplitude (A) of the vibration (44) of the temporal angular course (22) is less than or equal to a threshold value (48).

2. Method (24) according to claim 1,
**characterised in that**
the determination of the correction factor (20) takes place in an iterative manner, in particular by means of redetermining the angle (38) and the temporal angular course (22).

3. Method (24) according to claim 1 or 2,
**characterised in that**
the angle speed is used as the temporal angular course (22), the product of the determined speed (nₛₒₗₗ) and the line count (12) is used as the frequency and/or the offset (O) of the sinusoidal track (14) or the cosine track (16) is used as the correction factor (20).

4. Method (24) according to one of claims 1 to 3,
**characterised in that**
a phase (P) of the vibration (44) is determined with respect to the sinusoidal track (14) and/or the cosine track (16), in particular by means of the Goertzel algorithm.

5. Method (24) according to one of the preceding claims,
**characterised in that**
the offset (O) of the sinusoidal track (14) and/or the cosine track (16) is increased if the phase (P) is smaller than ± 90° with respect to the sinusoidal track (14) or the cosine track (16).

6. Method (24) according to one of the preceding claims,
**characterised in that**
the offset (O) of the sinusoidal track (14) and/or the cosine track (16) is reduced if the phase (P) is larger than ± 90° with respect to the sinusoidal track (14) or the cosine track (16).

7. Method (24) according to one of the preceding claims,
**characterised in that**
the amplitudes (A) of the sinusoidal track (14) and the cosine track (16) are adapted to each other.

8. Method (24) according to one of claims 1 to 7,
**characterised in that**,
before the first determination of the angle (38), the offset (O) of the sinusoidal track (14) and/or the cosine track (16) is set in such a manner that the integral over a period is equal to zero, in particular by means of a minimum/maximum comparison.

9. Method (24) according to one of claims 1 to 8,
**characterised in that**
a constant speed is chosen as the determined speed (nₛₒₗₗ).

## Revendications

1. Procédé (24) d'étalonnage d'un codeur rotatif (8) d'une machine électrique (2) conçu comme un codeur incrémental fournissant une piste sinusoïdale (14) et une piste cosinusoïdale (16) et qui présente un nombre de traits (12), procédé dans lequel
- la machine électrique (2) est réglée à une vitesse spécifique (nₛₒₗₗ),
- un angle (38) de la machine électrique (2) est déterminé à partir de la piste sinusoïdale (14) et/ou de la piste cosinusoïdale (16),
- une évolution de l'angle dans le temps (22) est déterminée sur cette base,
**caractérisé en ce que**
- une oscillation (44) est déterminée dans l'évolution de l'angle dans le temps (22) avec une fréquence de sensiblement un multiple entier du produit de la vitesse spécifique (nₛₒₗₗ) et du nombre de traits (12), et
- un facteur de correction (20) de la piste sinusoïdale (14) et/ou de la piste cosinusoïdale (16) en est déduit, au moyen duquel l'amplitude, la phase et/ou le décalage de la piste sinusoïdale ou cosinusoïdale (14, 16) est adapté,
- le facteur de correction (20) étant sélectionné de telle sorte que, lors d'une modification de la piste considérée (14, 16) d'un facteur de correction (20) et d'une nouvelle détermination de l'évolution de l'angle dans le temps au moyen de la piste (14a, 16a) modifiée par le facteur de correction (20), l'amplitude (A) de l'oscillation (44) de l'évolution de l'angle dans le temps (22) est inférieure ou égale à une valeur limite (48).

2. Procédé (24) selon la revendication 1,
**caractérisé**
**en ce que** le facteur de correction (20) est déterminé de manière itérative, en particulier en redéterminant l'angle (38) et de l'évolution de l'angle dans le temps (22).

3. Procédé (24) selon la revendication 1 ou 2,
**caractérisé**
**en ce que** la vitesse angulaire est utilisée comme évolution de l'angle dans le temps (22), le produit de la vitesse spécifique (nₛₒₗₗ) et du nombre de traits (12) est utilisé comme fréquence, et/ou le décalage (O) de la piste sinusoïdale (14) ou de la piste cosinusoïdale (16) est utilisé comme facteur de correction (20).

4. Procédé (24) selon l'une des revendications 1 à 3,
**caractérisé**
**en ce qu**'une phase (P) de l'oscillation (44) est déterminée par rapport à la piste sinusoïdale (14) et/ou à la piste cosinusoïdale (16), en particulier par l'algorithme de Goertzel.

5. Procédé (24) selon l'une des revendications précédentes,
**caractérisé**
**en ce que** le décalage (O) de la piste sinusoïdale (14) et/ou de la piste cosinusoïdale (16) est augmenté si la phase (P) par rapport à la piste sinusoïdale (14) ou à la piste cosinusoïdale (16) est inférieure à ± 90°.

6. Procédé (24) selon l'une des revendications précédentes,
**caractérisé**
**en ce que** le décalage (O) de la piste sinusoïdale (14) et/ou de la piste cosinusoïdale (16) est réduit si la phase (P) par rapport à la piste sinusoïdale (14) ou à la piste cosinusoïdale (16) est supérieure à ± 90°.

7. Procédé (24) selon l'une des revendications précédentes,
**caractérisé**
**en ce que** les amplitudes (A) de la piste sinusoïdale (14) et de la piste cosinusoïdale (16) sont adaptées l'une à l'autre.

8. Procédé (24) selon l'une des revendications 1 à 7,
**caractérisé**
**en ce que,** avant la première détermination de l'angle (38), le décalage (O) de la piste sinusoïdale (14) et/ou de la piste cosinusoïdale (16) est déterminé de telle sorte que l'intégrale sur une période soit égale à zéro, notamment par une comparaison minimum/maximum.

9. Procédé (24) selon l'une des revendications 1 à 8,
**caractérisé**
**en ce que** l'on choisit une vitesse constante comme vitesse spécifique (nₛₒₗₗ).
